(19) Europäisches Patentamt
European Patent Office
Office européen des brevets

(11) **EP 2 123 354 A1**

(12) **EUROPEAN PATENT APPLICATION**

(43) Date of publication:
**25.11.2009 Bulletin 2009/48**

(21) Application number: **09006168.0**

(22) Date of filing: **06.05.2009**

(51) Int Cl.:
*B01J 29/00* (2006.01)     *B01J 35/04* (2006.01)
*B01J 35/06* (2006.01)     *B01J 37/00* (2006.01)
*B01D 53/92* (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **20.05.2008 PCT/JP2008/059276**

(71) Applicant: **IBIDEN CO., LTD.**
**Ogaki-shi**
**Gifu 503-8604 (JP)**

(72) Inventors:
• **Ohno, Kazushige**
**Ibi-Gun**
**Gifu 501-0695 (JP)**

• **Kunieda, Masafumi**
**Ibi-Gun**
**Gifu 501-0695 (JP)**
• **Ido, Takahiko**
**Ibi-Gun**
**Gifu 501-0695 (JP)**

(74) Representative: **HOFFMANN EITLE**
**Patent- und Rechtsanwälte**
**Arabellastrasse 4**
**81925 München (DE)**

(54) **Honeycomb structure**

(57)     A honeycomb structure including pillar honeycomb units that include zeolite and an inorganic binder and have plural cells separated by a cell wall, the cells extending from a first end face to a second end face of the honeycomb unit along a longitudinal direction thereof, **characterized in that** the honeycomb unit includes zeolite exceeding 250 g/L with respect to apparent volume, zeolite exists in a center part of the cell wall in a thickness direction, and a surface of the cell wall has a greater proportion of zeolite than the center part of the cell wall in the thickness direction.

## FIG.1

**Description**

TECHNICAL FIELD

The present invention relates to honeycomb structures for exhaust gas treatment.

BACKGROUND ART

A large number of techniques have been developed in relation to conversion of automobile exhaust gas. With an increase in traffic, however, countermeasures taken against exhaust gas have hardly been satisfactory. Not only in Japan but also globally, automobile emission control is going to be further tightened. Especially, control on NOx in diesel emissions has been getting extremely strict. NOx reduction, which conventionally has been achieved by controlling the combustion system of an engine, has become too much to be handled by that alone.
As a diesel NOx conversion system responding to such a problem, NOx reduction systems using ammonia as a reducing agent (referred to as "SCR systems") have been proposed.
A honeycomb structure is known as a catalyst carrier used in such systems.
This honeycomb structure has, for example, multiple cells (through holes) extending from one to another of the end faces of the honeycomb structure along its longitudinal directions, and these cells are separated from each other by cell walls carrying a catalyst. Accordingly, when exhaust gas is caused to flow through such a honeycomb structure, NOx included in the exhaust gas is converted by the catalyst carried by the cell walls. Therefore, it is possible to treat the exhaust gas.
In general, the cell walls of such a honeycomb structure are formed of cordierite, and for example, zeolite (with iron or copper introduced through ion exchange) is carried by these cell walls as a catalyst. In addition, it has been proposed to form a honeycomb structure using zeolite for cell walls (for example, Patent Document 1).

[Patent Document 1] International Publication Number WO 2005/063653 Al

DISCLOSURE OF INVENTION

PROBLEM TO BE SOLVED BY INVENTION

With the above-described honeycomb structure having its cell walls formed of zeolite, the zeolite, contributing to NOx conversion, can be used in large amounts. Therefore, conversion of NOx can be efficiently performed. However, besides containing zeolite, the cell walls of the honeycomb structure generally contain an inorganic binder (e.g., 5%-50% by weight of the cell walls) and/or an inorganic fiber (e.g., 3%-40% by weight of the cell walls) in order to attain moldability and strength of the honeycomb structure. Further, inorganic particles other than zeolite may be added to the cell walls depending on necessity. Therefore, in an actual honeycomb structure, the amount of zeolite contained in the cell walls cannot be set to a relatively large value. Therefore, in the honeycomb structure of Patent Document 1, the conversion ratio of the honeycomb structure is substantially restricted by the upper limit of the amount of zeolite that can be contained in the cell walls. Thus, there is a problem of difficulty in obtaining a higher NOx conversion ratio. Therefore, there is still a demand for further improving the NOx conversion ratio of the honeycomb structure.
The present invention aims to solve such problems and provide a honeycomb structure having a higher NOx conversion ratio than before.

MEANS FOR SOLVING PROBLEM

The present invention provides a honeycomb structure including pillar honeycomb units that include zeolite and an inorganic binder and have plural cells separated by a cell wall, the cells extending from a first end face to a second end face of the honeycomb unit along a longitudinal direction thereof, **characterized in that:** the honeycomb unit includes the zeolite exceeding 250 g/L with respect to apparent volume; the zeolite exists in a center part of the cell wall in a thickness direction; and a surface of the cell wall has a greater proportion of the zeolite than the center part of the cell wall in the thickness direction.
It is preferable that the amount of the zeolite with respect to the apparent volume of the honeycomb unit is 320 g/L or less.
Further, in the honeycomb structure according to the present invention, it is preferable that the proportion of the zeolite is higher at the entire surface of the cell wall than the center part of the cell wall in the thickness direction in a case of observing the cell wall from a direction perpendicular to a longitudinal direction.
Further, in the honeycomb structure according to the present invention, it is preferable that the part having the high proportion of the zeolite has a thickness of 1 - 100 μm.

Further, it is preferable that the part having the high proportion of the zeolite includes the zeolite in a range of 60 wt% - 100 wt%.

Further, the ratio of concentration C2 of the zeolite included in the part having the high proportion of the zeolite with respect to concentration C1 of the zeolite included in the center part of the cell wall in the thickness direction (C2/C1) may be in a range of 1 < (C2/C1) ≦ 2.

Further, the honeycomb unit may further include alumina particles, titania particles, silica particles, zirconia particles, ceria particles, mullite particles, or precursors thereof.

Further, a ratio by weight of silica to alumina may be 30 to 50 in the zeolite of the cell wall.

Further, the inorganic binder may include at least one selected from a group consisting of alumina sol, silica sol, titania sol, water glass, sepiolite, and attapulgite.

Further, the honeycomb unit may further include inorganic fibers.

Further, in a case where the honeycomb unit includes inorganic fibers, the inorganic fibers may be at least one selected from the group consisting of alumina, silica, silicon carbide, silica-alumina, glass, potassium titanate, and aluminum borate.

Further, the honeycomb structure according to the present invention may have the plural honeycomb units joined by interposing an adhesive layer.

EFFECT OF INVENTION

With the present invention, a honeycomb structure has a high NoX conversion ratio compared to the related art.

BRIEF DESCRIPTION OF DRAWINGS

FIG. 1 is a perspective view schematically illustrating an example of a honeycomb structure according to the present invention;

FIG. 2 is a perspective view schematically illustrating an example of a honeycomb unit that compose the honeycomb structure of FIG. 1;

FIG. 3 is a partially enlarged cross-sectional view of a cell wall of a honeycomb unit in a honeycomb structure according to the present invention;

FIG. 4 is a graph schematically illustrating a relationship between zeolite concentration and the distance from a cell wall surface in a depth direction along line A-A of FIG. 3;

FIG. 5 is a partially enlarged cross-sectional view of a cell wall of other honeycomb unit in a honeycomb structure according to the present invention;

FIG. 6 is a partially enlarged cross-sectional view of a cell wall of yet other honeycomb unit in a honeycomb structure according to the present invention; and

FIG. 7 is a perspective view schematically illustrating other example of a honeycomb structure according to the present invention.

BEST MODE FOR CARRYING OUT THE INVENTION

Embodiments of the present invention are described below with reference to the drawings.

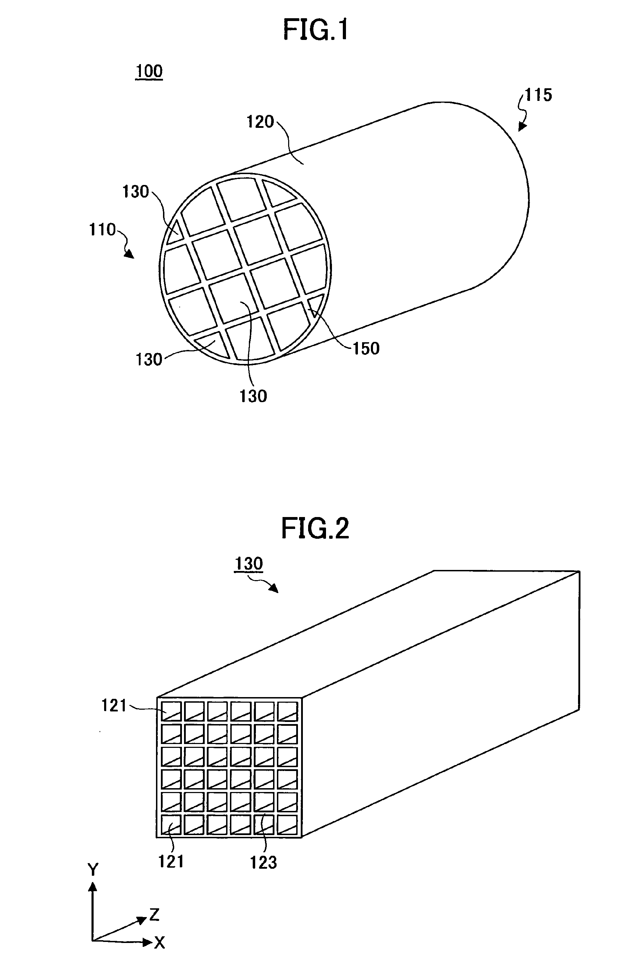

FIG. 1 schematically illustrates a honeycomb structure according to the present invention. Further, FIG.2 schematically illustrates an example of a honeycomb unit which is a basic unit constituting the honeycomb structure illustrated in FIG. 1.

As illustrated in FIG. 1, a honeycomb structure 100 according to the embodiment of the present invention has two open (end) faces 110 and 115. Further, the honeycomb structure 100 has a peripheral coat layer 120 formed at its peripheral surface except for the end faces 110 and 115.

The honeycomb structure 100 is formed by, for example, joining multiple pillar ceramic honeycomb units 130 shown in FIG. 2 (16 units in a four-by-four matrix in the case of FIG. 1) by interposing an adhesive layer 150 and thereafter cutting the peripheral side along a predetermined shape (a cylindrical shape in the case of FIG. 1).

As illustrated in FIG. 2, the honeycomb unit 130 includes multiple cells (through holes) 121, extending from one end to another end of the honeycomb unit 130 along its longitudinal directions and having two open end faces, and cell walls 123 separating the cells 121. The honeycomb unit 130 contains zeolite, which contributes to conversion of NOx, as an SCR system. Accordingly, it is not always necessary to have the cell walls 123 carry a noble metal catalyst in the case of using the honeycomb structure 100 according to the embodiment of the present invention as a catalyst carrier for NOx conversion. However, the cell walls 123 may further carry a noble metal catalyst.

The honeycomb structure 100 thus configured is used as, for example, the catalyst carrier of a urea SCR system having a urea tank. When exhaust gas is caused to flow through this urea SCR system, the urea contained in the urea tank reacts with water in the exhaust gas to generate ammonia:

$$CO(NH_2)_2 + H_2O \rightarrow 2NH_3 + CO_2. \quad \cdots \text{Formula (1)}$$

When this ammonia flows, together with exhaust gas including NOx, into each cell 121 from one of the open faces 110 and 115 (for example, the open face 110) of the honeycomb structure 100, the following reactions occur in this gas mixture on zeolite included in the cell walls 123:

$$4NH_3 + 4NO + O_2 \rightarrow 4N_2 + 6H_2O, \quad \cdots \text{Formula (2-1)}$$

$$8NH_3 + 6NO_2 \rightarrow 7N_2 + 12H_2O, \quad \cdots \text{Formula (2-2)}$$

$$2NH_3 + NO + NO_2 \rightarrow 2N_2 + 3H_2O \quad \cdots \text{Formula (2-3)}$$

Thereafter, the converted exhaust gas is discharged from the other one of the open faces 110 and 115 (for example, the open face 115) of the honeycomb structure 100. Thus, by causing exhaust gas to flow inside the honeycomb structure 100, NOx in the exhaust gas can be treated. Here, a method is shown that supplies $NH_3$ by hydrolyzing urea water, but $NH_3$ may also be supplied by other methods.

In a conventional honeycomb structure, the cell walls of a honeycomb unit are generally configured including at least first inorganic particles and an inorganic binder and further including inorganic fibers added as required. The inorganic binder is for attaining moldability of the honeycomb unit, and the inorganic fibers are for improving strength of the honeycomb unit. The honeycomb unit may further include second inorganic particles different from the first inorganic particles for improving strength. Therefore, as in the above-described Patent Document 1, even in a case of manufacturing a honeycomb unit by using zeolite (contributing to NOx conversion reaction) as the first inorganic material, there is a limit in the amount of zeolite with respect to apparent volume of the honeycomb unit (250 g/L (liters) at most in a normal case). For example, in calculating a pore configuration of a typical cell configuration in a case of supposing a typical mixture ratio having 66.7 wt% zeolite (first inorganic particles), 13.3 wt% inorganic binder (solid content ratio) and 20.0 wt% inorganic fiber, the amount of zeolite with respect to apparent volume of the honeycomb unit would be approximately 230 -250 g/L (liters).

Therefore, in a conventional honeycomb structure, it is difficult to increase the amount of zeolite with respect to apparent volume included in the cell walls of the honeycomb unit (250 g/L (liters) equal to or greater than a certain upper limit. Due to this limitation, it is difficult to improve the NOx conversion ratio of the honeycomb structure equal to or greater than a certain value.

On the other hand, according to the honeycomb structure according to the present invention, the cell walls 123 of the honeycomb unit 130 have an aspect in which an area towards its surface has higher zeolite concentration than its center part with respect to the thickness direction of the cell walls 123. That is, in the honeycomb unit 130 according to the present invention, the zeolite concentrations at a center part and a surface side with respect to the thickness direction of the cell walls 123 are different wherein the zeolite concentration at the surface side of the cell walls 123 is higher.

In the present application, the area being situated towards the surface side of the cell walls 123 and having a zeolite concentration higher than the center part with respect to the thickness direction of the cell walls 123 is hereinafter referred to as "high zeolite concentration part" 310. Further, the remaining other area including the center part with respect to the thickness direction of the cell walls is referred to as "base part (also referred to as "base material")" 320.

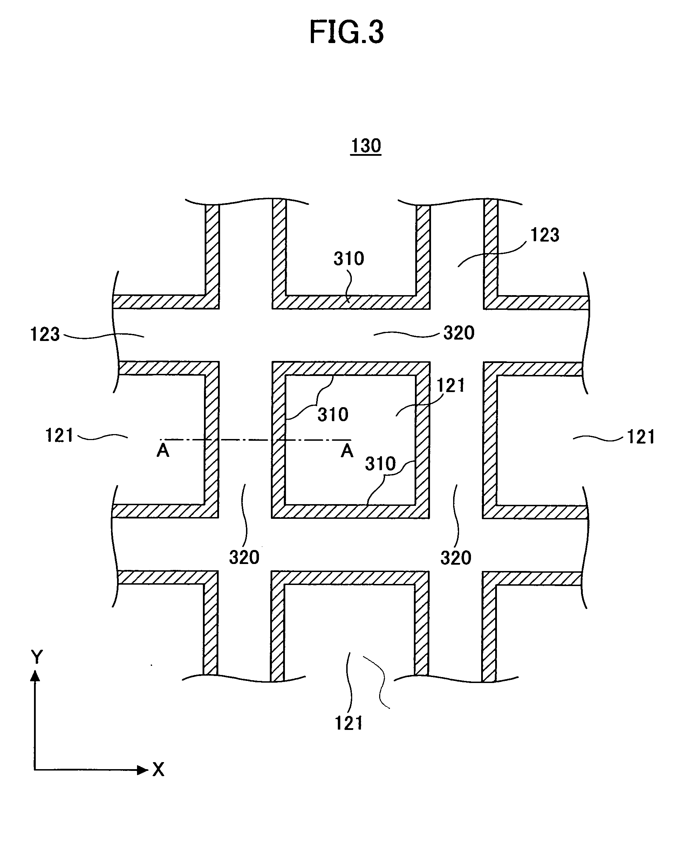

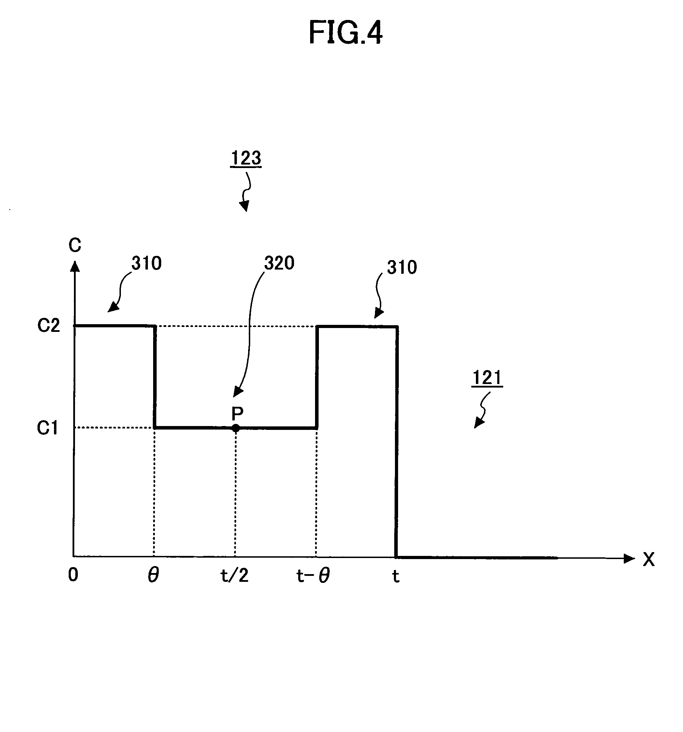

Fig. 3 schematically illustrates an enlarged cross-sectional view of the cell walls 123 of the honeycomb unit 130 according to the present invention. Further, Fig. 4 is a graph schematically illustrating a relationship between the distance from a surface of the cell walls in a depth direction (taken along line A-A of Fig. 3) and the zeolite concentration. In Fig. 4, the horizontal axis (corresponding to the X direction in Fig. 2) indicates locations in a cross-section perpendicular to the longitudinal direction of the honeycomb unit, and the vertical axis indicates zeolite concentration C. The thickness of the cell walls of the honeycomb unit is indicated as "t", and the X coordinates of a center P with respect to the thickness direction is indicated as "t/2". The parts where $X < 0$ and $X > t$ correspond to the cells 121.

As understood from Figs. 3 and 4, the surface of the cell walls ($X = 0, t$) includes a high zeolite concentration part 310 having a thickness of $\theta$. The base part 320 exists inside the cell walls. The zeolite concentration C2 at the surface of the cell walls ($X = 0, t$) is greater than the zeolite concentration C1 at the center P of the cell walls 123.

In the cell walls 123 of the honeycomb unit 130, the base part 320 serves an important role in terms of, for example, the strength and moldability of the honeycomb unit. Therefore, the same as the cell walls of the conventional honeycomb unit, the base part 320, other than including zeolite (first inorganic particles) may also include, for example, inorganic binders, inorganic fibers, and second inorganic particles. In other words, the upper limit of zeolite concentration of the base part 320 is restricted. On the other hand, the high zeolite concentration part 310 is a part contributing to improvement of NOx conversion performance and is not intended to improve strength and moldability of the honeycomb unit as the base part 320. Therefore, because components other than zeolite inside the high zeolite concentration part 310 (e.g., inorganic binders and/or inorganic fibers) can be omitted according to necessity, the zeolite concentration can be increased to a desired value. Due to this aspect of the present invention, the amount of zeolite contained in the cell walls with respect to the apparent volume of the honeycomb unit 130 can be increased to greater than before (conventional honeycomb structure). Thereby, the NOx conversion ratio of the honeycomb structure according to the present invention can be significantly improved.

The cell walls 123 having the configuration illustrated in Fig. 3 can be easily manufactured by applying a coat of zeolite (concentration C2, C2 > C1) onto the cell walls of the honeycomb unit containing zeolite (concentration C1). However, this is simply one example, and it is evident for one skilled in the art that the cell walls 123 including the high zeolite concentration part 310 and the base part 320 may be manufactured using other methods.

In the example of Fig. 4, the zeolite concentration profile with respect to the depth direction of the cell walls has two horizontal parts corresponding to concentrations C1 and C2. However, the present invention is not limited to such a profile. For example, the base part 320, in the range of $\theta \leqq X \leqq (t - \theta)$, may have zeolite concentration that is not constant and instead variable. The base part 320, in the range of $\theta \leqq X \leqq (t - \theta)$, may further have another horizontal part having zeolite concentration of C3 (C3 < C2). The high zeolite concentration part 310 ($0 \leqq X \leqq \theta$, $(t - \theta) \leqq X \leqq t$) may have zeolite concentration that is not constant and instead variable with respect to the depth direction.

In the present application, confirming whether zeolite is included in the center part with respect to the thickness of the cell walls 123 and in the surface was performed as follows. The surfaces of the cell walls are scraped and components of the surface of the cell walls (being in a powdery state) are collected with use of tweezers or the like. In a similar manner, powdery samples are collected from the center part with respect to the thickness direction of the cell walls. By performing X-ray diffraction analysis on the powder samples, it is determined whether zeolite is contained in the surface and center part of the cell walls. In the present application, RINT 2500PC apparatus (manufactured by Rigaku Corporation) is used.

Whether the high zeolite concentration part 310 is formed in the surface of the cell walls can easily be determined by comparing the results of quantity analysis of both samples described above.

It is preferable that the zeolite amount P contained in the honeycomb unit (value with respect to apparent volume of honeycomb unit) is in a range of 250 g/L (liters) < P $\leqq$ 320 g/L (liters). This is because the strength of the honeycomb unit significantly decreases when the amount of zeolite P contained in the honeycomb unit exceeds 320 g/L.

Further, the thickness $\theta$ of the high zeolite concentration part 310 is preferred to be in the range of 1 $\mu$m - 100 $\mu$m. Further, the ratio between the thickness $\theta$ of the high zeolite concentration part 310 and the thickness $\alpha$ of the base part 320 ($\theta : \alpha$) is preferred to be in the range of 1/2 - 1/100.

The concentration C2 of zeolite included in the high zeolite concentration part 310 of the cell walls 123 is preferred to be in the range of 60 wt% - 100 wt%, and more preferably 80 wt% - 95 wt%.

The ratio between the zeolite concentration C1 of the base part 320 and the zeolite concentration C2 of the high zeolite concentration part 310 (C2/C1) is preferred to be in the range of 1 < (C2/C1) $\leqq$ 2, and more preferably to be in the range of 1.5 $\leqq$ (C2/C1) $\leqq$ 1.7.

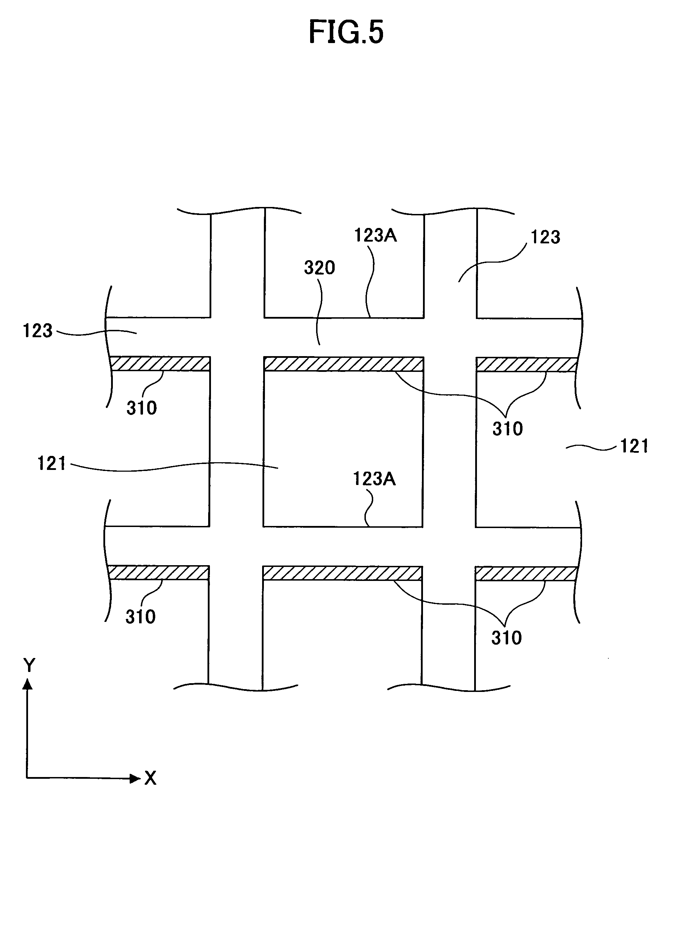

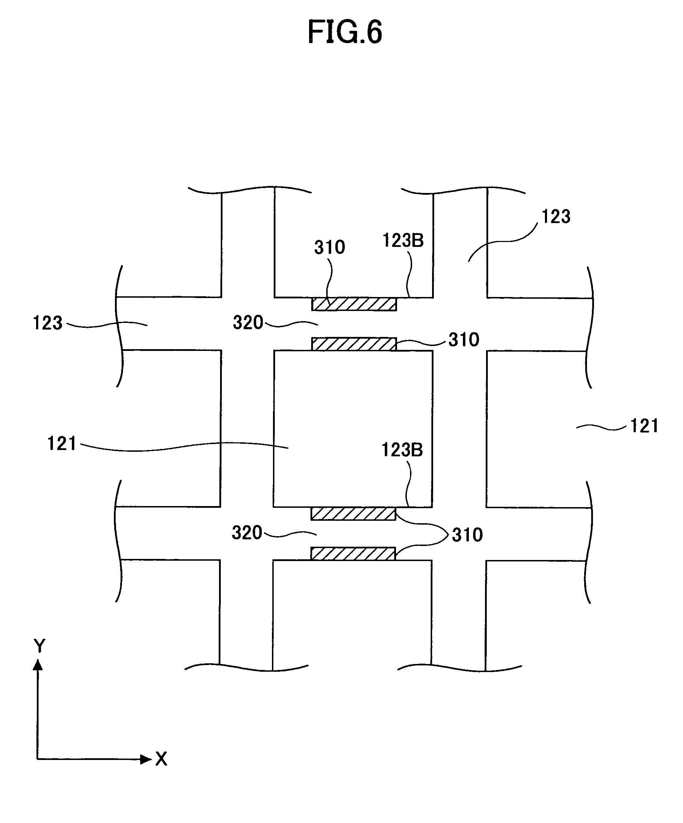

The above-described embodiment describes a configuration where the high zeolite concentration part 310 is provided in the entire surface of the cell walls 123, that is, a configuration where all of the base parts 320 are sandwiched by the high zeolite concentration part 310 on both sides. It is, however, evident for one skilled in the art that the present invention is not limited to the above-described configuration. For example, as illustrated in Figs. 5 and 6, the high zeolite concentration parts 310 may be formed only in a portion(s) of the surface of the cell walls. In Fig. 5, the high zeolite concentration parts 310 are formed only on one side of the surface of the cell walls 123A. Therefore, one side (upper side in the drawing) of the base part 320 is exposed with respect to the cell 121. In Fig. 6, the high zeolite concentration part 310 is formed only in a predetermined portion(s) (upper and lower surfaces in Fig. 6) of the surface of the cell walls 123B. It is evident for one skilled in the art that even in a case where the high zeolite concentration part 310 is configured in such a manner, the amount of zeolite P included in the honeycomb unit can be increased compared to before (conventional honeycomb structure), and the NOx conversion ratio of the honeycomb structure can be improved.

The base part 320 of the cell walls 123 of the honeycomb unit 130 includes an inorganic binder in addition to zeolite. Further, the base part 320 may further include inorganic particles other than zeolite and/or inorganic fibers.

Preferably, zeolite included in the base part 320 is, for example, β-zeolite, zeolite Y, ferrierite, zeolite ZSM-5, mordenite, faujasite, zeolite A, or zeolite L. Alternatively, zeolite included in the base part 320 may have Fe, Cu, Ni, Co, Zn, or Mn introduced therein through ion exchange. Preferably, a ratio by weight of silica to alumina is 30 to 50 in the zeolite included in the base part 320.

Inorganic sol, a clay-based binder, etc., may be used as the inorganic binder included in the base part 320. Examples of the inorganic sol include alumina sol, silica sol, titania sol, and water glass. Examples of the clay-based binder include clay, kaolin, montmonrillonite, and clays of a double-chain structure type, such as sepiolite and attapulgite. These may be used alone or in combination.

Of these, at least one selected from the group consisting of alumina sol, silica sol, titania sol, water glass, sepiolite, attapulgite and the like is desirable.

The inorganic particles other than zeolite contained in the base part 320 are desirably particles made of alumina, silica, zirconia, titania, ceria, mullite, zeolite or the like. These particles may be used alone or in combination. Of these, alumina and zirconia are particularly desirable.

Further, in the case of adding inorganic fibers to the base part 320, alumina, silica, silicon carbide, silica-alumina, glass, potassium titanate, aluminum borate or the like is desirable as the material of the inorganic fibers. These may be used alone or in combination. Of the above-described materials, alumina is desirable. Whiskers are also included in inorganic fibers.

With respect to the amount of inorganic particles (of zeolite and inorganic particles other than zeolite) included in the base part 320, a desirable lower limit is 30 wt%, a more desirable lower limit is 40 wt%, and a still more desirable lower limit is 50 wt%, while a desirable upper limit is 90 wt%, a more desirable upper limit is 80 wt%, and a still more desirable upper limit is 75 wt%. If the inorganic particles content (of zeolite and inorganic particles other than zeolite) is less than 30 wt%, the amount of zeolite contributing to conversion is relatively reduced. On the other hand, if the inorganic particles content exceeds 90 wt%, the honeycomb unit strength may be reduced.

The inorganic binder included in the base part 320 is preferably more than or equal to 5 wt%, more preferably more than or equal to 10 wt%, and still more preferably more than or equal to 15 wt% as solids content. On the other hand, the inorganic binder content is preferably less than or equal to 50 wt%, more preferably less than or equal to 40 wt%, and still more preferably less than or equal to 35 wt% as solids content. If the amount of the inorganic binder is less than 5 wt% as solids content, the manufactured honeycomb unit may be reduced in strength. On the other hand, if the amount of the inorganic binder exceeds 50 wt% as solids content, the moldability of the raw material composition may be degraded.

In the case of the base part 320 including inorganic fibers, the total amount of the inorganic fibers has a lower limit of desirably 3 wt%, more desirably 5 wt%, and still more desirably 8 wt%, and has an upper limit of desirably 50 wt%, more desirably 40 wt%, and still more desirably 30 wt%. If the inorganic fibers content is less than 3 wt%, the contribution of the inorganic fibers to an increase in the honeycomb unit strength is reduced. If the inorganic fibers content exceeds 50 wt%, the amount of zeolite contributing to NOx conversion is relatively reduced.

On the other hand, except for having an aspect of containing zeolite with a concentration higher than that of the base part 320, the high concentration zeolite part 310 of the cell walls of the honeycomb unit 130 has no particular structural limitations and may contain any other material in any amount. For example, the high concentration zeolite part 310 may include inorganic binders, inorganic fibers and/or inorganic particles other than zeolite. Of the above-described inorganic binders, inorganic fibers, and inorganic particles other than zeolite, a material selected from the above-described materials used for the base part 320 or other materials may be used.

The entire thickness of the cell walls 123 of the honeycomb unit 130 (base part 320 + high concentration zeolite part 310) is not to be limited in particular. It is, however, preferable for the lower limit to be 0.1 mm from the aspect of strength and the upper limit to be 0.4 mm from the aspect of conversion performance.

The shape of a cross section of the honeycomb unit 130 perpendicular to its longitudinal directions is not limited in particular, and may be any shape as long as the honeycomb units 130 are joinable by interposing the adhesive layer 150. The shape of the honeycomb unit 130 may also be square, rectangular, hexagonal, sectorial, etc.

Further, the shape of a cross section of each cell 121 of the honeycomb unit 130 perpendicular to its longitudinal directions is not limited in particular, and may be not only a square shape but also a triangular or polygonal shape.

The cell density of the honeycomb unit 130 is preferably in the range of 15.5-186 cells/cm$^2$ (100-1200 cpsi), more preferably in the range of 46.5-170 cells/cm$^2$ (300-1100 cpsi), and still more preferably in the range of 62-155 cells/cm$^2$ (400-1000 cpsi).

The honeycomb structure 100 according to the embodiment of the present invention may have any shape. For example, in addition to a cylindrical shape shown in FIG. 1, the honeycomb structure 100 may also have a shape such as a cylindroid, square pillar, or polygonal pillar.

The adhesive layer 150 of the honeycomb structure 100 is formed using adhesive layer paste as a raw material. The adhesive layer paste may include inorganic particles and an inorganic binder, inorganic binder and inorganic fibers, or inorganic particles, inorganic binder and inorganic fibers.

The same materials as those forming the honeycomb unit 130 as described above may be used as the inorganic particles, inorganic binder, and inorganic fibers. The organic binder may further include, is not limited in particular, and may be one or more selected from, for example, polyvinyl alcohol, methylcellulose, ethylcellulose, carboxymethylcellulose, etc. Of the organic binders, carboxymethylcellulose is desirable.

It is preferable that the adhesive layer 150 be 0.3 to 2.0 mm in thickness. This is because if the thickness of the adhesive layer 150 is less than 0.3 mm, sufficient bonding strength may not be obtained. Further, if the thickness of the adhesive layer 150 exceeds 2.0 mm, pressure loss may be increased. The number of honeycomb units to be joined is suitably determined in accordance with the size of the honeycomb structure.

The peripheral coat layer 120 of the honeycomb structure 100 is formed using, as a raw material, paste including at least one of inorganic particles, an inorganic binder, and inorganic fibers. The paste forming the peripheral coat layer 120 may further include an organic binder. The materials forming the peripheral coat layer 120 may be either the same as or different from, but are preferably the same as those of the adhesive layer 150 because this makes occurrence of peeling-off or generation of cracks less likely, the same as in the adhesive layer 150. A pore-forming agent such as balloons, which are minute hollow balls whose component is oxide-based ceramic, spherical acryl particles, or graphite may be added as required to the paste serving as a raw material. The coat layer 120 preferably has a final thickness of 0.1 mm to 2.0 mm.

In the description above, an example of a honeycomb structure formed by joining plural honeycomb units 130 by interposing the adhesive layer 150 (as illustrated in FIG. 1) has been described.

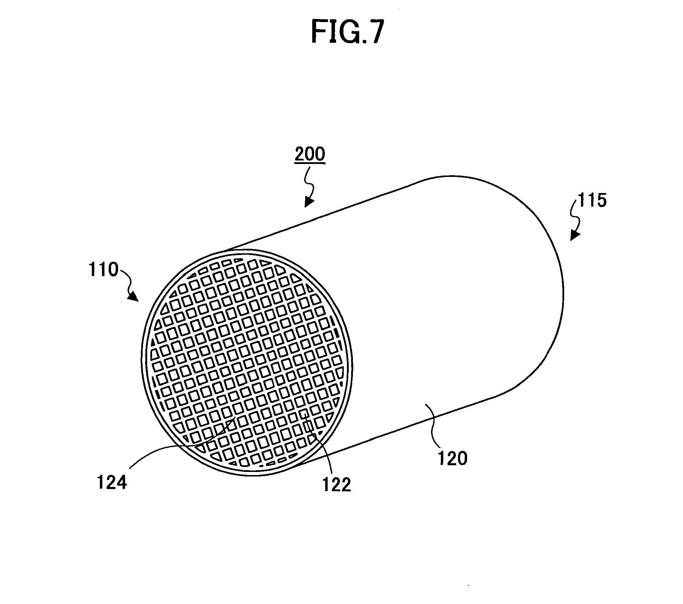

FIG. 7 illustrates an exemplary configuration of other honeycomb structure according to the present invention. The honeycomb structure 200 is configured the same as the honeycomb structure 100 except for having a single honeycomb unit having plural cells 122 being separated by cell walls 124 and arranged in its longitudinal directions. Although the peripheral coat layer 120 is provided on the peripheral surface of the honeycomb structure 200 in the example of FIG. 7, the peripheral coat layer may or may not be provided.

(Method of Manufacturing Honeycomb Structure)

Next, a method for manufacturing a honeycomb structure according to the present invention is described. Here, the following example describes a method for manufacturing the honeycomb structure 100 formed of plural honeycomb units as illustrated in FIG. 1.

First, a honeycomb unit molded body is made by, for example, extrusion molding using raw material paste including inorganic particles including zeolite and an inorganic binder as principal components and further having inorganic fibers added as required.

In addition to these, an organic binder, a dispersion medium, and a molding aid may be suitably added to the raw material paste in accordance with moldability. The organic binder is not limited in particular. The organic binder includes one or more organic binders selected from, for example, methylcellulose, carboxymethylcellulose, hydroxyethylcellulose, polyethylene glycol, phenolic resin, epoxy resin and the like. The amount of the organic binder blended is preferably 1-10 parts by weight to the total of 100 parts by weight of the inorganic particles, inorganic binder, and inorganic fibers.

The dispersion medium is not limited in particular, and may be, for example, water, an organic solvent (such as benzene), alcohol (such as methanol), etc. The molding aid is not limited in particular, and may be, for example, ethylene glycol, dextrin, a fatty acid, fatty acid soap, polyalcohol and the like.

The raw material paste is not limited in particular, and is preferably subjected to mixing and kneading. For example, the raw material paste may be mixed using a mixer, attritor, or the like, and may be well kneaded with a kneader or the like. The method of molding the raw material paste is not limited in particular. It is preferable, for example, to form the raw material paste into a shape having cells by extrusion molding or the like.

Next, it is preferable to dry the obtained molded body. The drying apparatus used for drying is not limited in particular, and may be a microwave drying apparatus, hot air drying apparatus, dielectric drying apparatus, reduced-pressure drying apparatus, vacuum drying apparatus, freeze drying apparatus, or the like. Further, it is preferable to degrease the obtained molded body. The conditions for degreasing, which are not limited in particular and are suitably selected in accordance with the kind and amount of the organic matter included in the molded body, are preferably approximately 400 °C and 2 hours. Further, it is preferable to subject the obtained molded body to firing. The condition for firing is not limited in particular, and is preferably 600-1200 °C, and more preferably 600-1000 °C. This is because sintering does not progress at firing temperatures less than 600 °C, thus resulting in reduced strength as a honeycomb unit, and because sintering progresses excessively at firing temperatures more than 1200 °C, thus reducing zeolite reaction sites.

Next, a high concentration zeolite part is formed on the surface of the cell walls of the honeycomb unit. The high concentration zeolite part may be formed by any conventional depositing method such as an impregnating method or a coating method. For example, in a case of the impregnating method, a high concentration zeolite part is formed on the entire surface of the cell walls by impregnating the honeycomb unit in a paste containing zeolite of high concentration. Further, by masking a predetermined portion of the cell walls prior to impregnating the honeycomb unit in the paste, a honeycomb unit can be manufactured having a high concentration zeolite part 310 provided only at a portion of the surface of the cell walls as illustrated in Figs. 5 and 6. Then, by drying the honeycomb unit and solidifying the paste, the cell walls can have the high concentration zeolite part 310 adhere thereto.

Next, adhesive layer paste to later serve as an adhesive layer is applied with uniform thickness on the side surfaces of the honeycomb unit obtained by the above-described processes, and thereafter, other honeycomb units are stacked one after another on the corresponding sides with this adhesive layer paste being interposed therebetween. By repeating this process, a honeycomb structure of a desired size (for example, having honeycomb units arranged in a four-by-four matrix) is made.

Next, this honeycomb structure is heated to dry and solidify the adhesive layer paste so as to form an adhesive layer and adhere and fix the honeycomb units to each other. The heating and solidifying processes are performed by retaining the honeycomb units at 500 °C for 2 hours.

Next, the honeycomb structure is cut into, for example, a cylindrical shape using a diamond cutter or the like, thereby making a honeycomb structure with a necessary peripheral shape.

Next, after applying peripheral coat layer paste on the peripheral surface (side surface) of the honeycomb structure, the peripheral coat layer paste is dried and solidified to form a peripheral coat layer.

It is preferable to degrease this honeycomb structure after joining the honeycomb units by interposing the adhesive layer (after forming the peripheral coat layer in the case of providing the peripheral coat layer). As a result of this process, if an organic binder is included in the adhesive layer paste and/or the peripheral coat layer paste, this organic binder can be removed by degreasing. The conditions for degreasing, which are suitably determined in accordance with the kind and amount of the included organic material, are usually approximately 700 °C and 2 hours.

By the above-described processes, the honeycomb structure 100 illustrated in FIG. 1 can be manufactured.

The cutting process may be omitted by manufacturing multiple differently-shaped honeycomb units and joining them into a predetermined shape by interposing an adhesive layer.

[Examples]

A detailed description is given of the embodiment of the present invention based on the following examples.

[Example 1]

First, 2250 parts by weight of Fe zeolite particles (2 $\mu$m in average particle size), 550 parts by weight of alumina particles (2 $\mu$m in average particle size), 2600 parts by weight of alumina sol (solid content 20 wt%), 780 parts by weight of alumina fibers (100 $\mu$m in average fiber length and 6 $\mu$m in average fiber diameter), 410 parts by weight of methylcellulose, a plasticizer, and lubricant (UNILUB) were mixed and kneaded, so that a mixture composition was obtained. The Fe zeolite particles had 3 wt% of its part corresponding to the zeolite exchanged with Fe ions. Next, this mixture composition was subjected to extrusion molding using an extruder, so that honeycomb unit molded bodies were obtained.

Next, the molded bodies were sufficiently dried using a microwave drying apparatus and a hot air drying apparatus, and were degreased, being retained at 400 °C for 2 hours. Thereafter, the molded bodies were subjected to firing, being retained at 700 °C for 2 hours, so that honeycomb units (35 mm in height, 35 mm in width, and 150 mm in overall length) were obtained. The cell wall thickness was 0.15 mm, and the cell density was 78 cells/cm$^2$. The opening ratio of the cell was 75%.
Further, the weight concentration C1 of zeolite contained in the honeycomb unit was 54.9 wt%.

Next, a high concentration zeolite part is formed by the following method.

First, a coating paste is obtained by mixing 80 wt% of Fe zeolite particles (2 $\mu$m in average particle size) and 20 wt% alumina sol (solid content 20 wt%) and then adding water to the mixture for obtaining a solid of 35 wt%. Next, the honeycomb units were impregnated in the coating paste and then removed from the coating paste. Next, the honeycomb units were retained at 500 °C for 2 hours, to thereby form a high concentration zeolite part on the entire surface of the cell walls of the honeycomb units. The thickness θ of the high density zeolite part was approximately 50 $\mu$m. The zeolite concentration C2 contained in the high concentration zeolite part was 95.2 wt%.

With such processes, the honeycomb unit according to Example 1 was obtained. The opening ratio of the finally obtained honeycomb unit was 60%. The amount of zeolite P with respect to the apparent volume of the honeycomb unit was 320 g/L (liters).

The Fe ion exchanged zeolite was obtained by performing ion exchange on zeolite particles with use of a nitrate solution. The amount of ion exchange was determined by IPC spectral analysis using an apparatus ICPS-8100 (manufactured by Shimadzu Corporation).

[Example 2]

Honeycomb units according to Example 2 were manufactured by the same method as in the case of Example 1. In Example 2, however, the coating paste used in forming the high density zeolite part was prepared by mixing 75 wt% of Fe zeolite particles (2 $\mu$m in average particle size), 20 wt% of alumina sol (solid content 20 wt%), and 5 wt% of alumina fibers (100 $\mu$m in average fiber length and 6 $\mu$m in average fiber diameter) and further adding water to obtain a solid content of 35 wt%. The thickness $\theta$ of the high concentration zeolite part was approximately 50 $\mu$m. Further, the zeolite density C2 contained in the high concentration zeolite part was 89.3 wt%.
The opening ratio of the finally obtained honeycomb units was 60%. The amount of zeolite P with respect to apparent volume of the honeycomb unit was 310 g/L (liters).

[Example 3]

Honeycomb units according to Example 3 were manufactured by the same method as in the case of Example 1. In Example 3, however, the coating paste used in forming the high density zeolite part was prepared by mixing 70 wt% of Fe zeolite particles (2 $\mu$m in average particle size), 20 wt% of alumina sol (solid content 20 wt%), and 10 wt% of alumina fibers (100 $\mu$m in average fiber length and 6 $\mu$m in average fiber diameter) and further adding water to obtain a solid content of 35 wt%. The thickness $\theta$ of the high concentration zeolite part was approximately 50 $\mu$m. Further, the zeolite density C2 contained in the high concentration zeolite part was 83.3 wt%.
The opening ratio of the finally obtained honeycomb units was 60%. The amount of zeolite P with respect to the apparent volume of the honeycomb unit was 300 g/L (liters).

[Comparative Example 1]

Honeycomb units according to Comparative Example 1 were manufactured by the same method as in the case of Example 1. In Comparative Example 1, however, a "non-high concentration" zeolite coating part is provided instead of the high concentration zeolite part. That is, in Comparative Example 1, a coating paste is obtained by mixing 36.5 wt% of Fe zeolite particles (2 $\mu$m in average particle size), 8.9 wt% of alumina particles (2 $\mu$m in average particle size), 42.1 wt% of alumina sol (solid content 20 wt%), and 12.5 wt% of alumina fibers (100 $\mu$m in average fiber length and 6 $\mu$m in average fiber diameter) and further adding water to obtain a solid content of 35 wt%. The thickness $\theta$ of the coating part was approximately 50 $\mu$m. Further, the zeolite density C2 contained in the coating was 54.9 wt%.
The opening ratio of the finally obtained honeycomb units was 60%. The amount of zeolite P with respect to the apparent volume of the honeycomb unit was 250 g/L (liters).

[Comparative Example 2]

Honeycomb units according to Comparative Example 2 were manufactured by the same method as in the case of Example 1. In Comparative Example 2, however, coating is not performed on the cell walls. The thickness of the cell walls was 0.25 mm. The cell density was 78 cells/cm$^2$. The opening ratio was 54.9 wt%. The amount of zeolite P with respect to the apparent volume of the honeycomb unit was 250 g/L (liters).
Table 1 illustrates, with respect to the honeycomb units according to the above-described Examples and Comparative Examples, the composition ratio of the coating paste, the zeolite concentration C2 (wt%) of the obtained coating part, the ratio of the zeolite concentration C2 of the coating part of the cell walls with respect to the zeolite concentration C1 of the base part of the cell walls (C2/C1), and the zeolite amount P with respect to the apparent volume of the obtained honeycomb unit.

[Table 1]

| | COATING BLEND RATIO (wt%) | | | | ZEOLITE CONCENTRATION INSIDE COATING C2 (wt%) | RATIO OF ZEOLITE CONCENTRATION INSIDE CELL WALL $\left( \dfrac{\text{SURFACE PART C2}}{\text{CENTER PART C1}} \right)$ | AMOUNT OF ZEOLITE OF HONEYCOMB UNIT P (g/L) | NOx CONVERSION RATIO N (%) | STRENGTH σ (MPa) |
|---|---|---|---|---|---|---|---|---|---|
| | Fe ZEOLITE | ALUMINA SOL | γ ALUMINA | ALUMINA FIBER | | | | | |
| EXAMPLE 1 | 80.0 | 20.0 | - | - | 95.2 | 1.7 | 320 | 98 | 3.5 |
| EXAMPLE 2 | 75.0 | 20.0 | - | 5. 0 | 89.3 | 1.6 | 310 | 98 | 3.8 |
| EXAMPLE 3 | 70.0 | 20.0 | - | 10. 0 | 83.3 | 1.5 | 300 | 97 | 4.1 |
| COMPARATIVE EXAMPLE 1 | 36.5 | 42.1 | 8. 9 | 12. 5 | 54.9 | 1.0 | 250 | 78 | 4.5 |
| COMPARATIVE EXAMPLE 2 | - | - | - | - | - | - | 250 | 78 | 4.5 |
| (Evaluation of NOx treating performance) | | | | | | | | | |

Evaluation of NOx treating performance was conducted by using the examples 1-3 and the comparative examples 1-2 of the honeycomb units manufactured by the above-described methods. In the evaluation, the honeycomb units (evaluation samples), each of which being cut into a size having an outer diameter of 30 mm and a length of 50 mm, were used.

The evaluation of NOx performance was performed by introducing test gas with simulated running conditions of an automobile diesel engine into the honeycomb unit, performing a NOx treatment, and measuring the amount of NO (nitric oxide) contained in the gas discharged from the honeycomb unit (evaluation sample).

Table 2 illustrates the composition of the test gas.

[Table 2]

| GAS TYPE | CONCENTRATION |
|---|---|
| $CO_2$ | 5vol% |
| $O_2$ | 14vol% |
| NO | 350ppm |
| $NH_3$ | 350ppm |
| $H_2O$ | 5vol% |
| $N_2$ | balance |
| | (SV : 35000/hr) |

The test was continued starting from guiding the test gas into the honeycomb units (evaluation samples) and ending until the NO concentration in the discharged gas hardly changed any more. In measuring the NO concentration, a MEXA-1170 machine (manufactured by HORIBA) was used. The NO detection limit of this machine is 0.1 ppm. The test temperature (honeycomb unit and test gas temperature) was conducted at 250 °C and was maintained constant during the test.

The NOx conversion ratio N is calculated based on the obtained measurement results. The NOx conversion ratio N is calculated as follows:

```
N (%) = {(NO concentration of gas mixture before being introduced into honeycomb unit) - (NO concentration of gas mixture after being discharged from honeycomb unit)} / (NO

concentration of gas mixture before being introduced into

honeycomb unit) × 100 ... Formula (3)
```

The results are shown in the above-described Table 1. From these results, it has become evident that the honeycomb unit according to the present invention (evaluation samples of Examples 1-3) have higher NOx conversion ratio compared to the honeycomb units (evaluation samples) of the Comparative Examples 1 and 2.

(Strength Evaluation of Honeycomb Unit)

A strength evaluation test was conducted using the honeycomb units of the Examples 1-3 and the Comparative Examples 1-2 of the honeycomb units (vertical 35 mm × horizontal 35 mm × entire length 150 mm) manufactured by the above-described methods. The strength evaluation test was conducted using a 3 point bending test. The test was conducted by using a 3 point bending apparatus 5582 manufactured by Instron in compliance with JIS-R1601.

The test was conducted as follows. First, the breakage weight W of each honeycomb unit was measured by applying pressure to the honeycomb units in a direction perpendicular to the longitudinal axis of the honeycomb unit where the cross head speed is 1 mm/minute and the span distance L is 135 mm. Then, the cross-sectional secondary moment is calculated by subtracting the portion of the cells of the honeycomb units. Further, 3 point bending strength σ was obtained with the following formula.

$$\sigma = WL/4z \ldots \text{Formula (4)}$$

The measurement results of each honeycomb unit are shown in the right column of the above-described Table 1. From these results, it was learned that the decrease of strength of the honeycomb units of Examples 1-3 are relatively insignificant compared to the honeycomb units of the Comparative Examples 1 and 2. Particularly, it was learned that the honeycomb unit of Example 3 (C2/C1 = 1.5) can obtain the same strength as that of the honeycomb units of the Comparative Examples 1 and 2.

Therefore, it is regarded that providing of the high zeolite concentration part has little effect on the decrease of strength of the honeycomb unit in a case where the amount of zeolite P with respect to apparent volume of the honeycomb unit is 320 g/L (liters).

**Claims**

1. A honeycomb structure including pillar honeycomb units that include zeolite and an inorganic binder and have a plurality of cells separated by a cell wall, the cells extending from a first end face to a second end face of the honeycomb unit along a longitudinal direction thereof, **characterized in that:**

   the honeycomb unit includes the zeolite exceeding 250 g/L with respect to apparent volume;
   the zeolite exists in a center part of the cell wall in a thickness direction; and
   a surface of the cell wall has a greater proportion of the zeolite than the center part of the cell wall in the thickness direction.

2. The honeycomb structure as claimed in claim 1, **characterized in that** the amount of the zeolite with respect to the apparent volume of the honeycomb unit is 320 g/L or less.

3. The honeycomb structure as claimed in claim 1, **characterized in that** the proportion of the zeolite is higher at the entire surface of the cell wall than the center part of the cell wall in the thickness direction in a case of observing the cell wall from a direction perpendicular to a longitudinal direction.

4. The honeycomb structure as claimed in any of claims 1 to 3, **characterized in that** the part having the high proportion of the zeolite has a thickness of 1 - 100 $\mu$m.

5. The honeycomb structure as claimed in any of claims 1 to 4, **characterized in that** the part having the high proportion of the zeolite has the zeolite in a range of 60 wt% - 100 wt%.

6. The honeycomb structure as claimed in any of claims 1 to 5, **characterized in that** the ratio of concentration C2 of the zeolite included in the part having the high proportion of the zeolite with respect to concentration C1 of the zeolite included in the center part of the cell wall in the thickness direction (C2/C1) is in a range of $1 < (C2/C1) \leqq 2$.

7. The honeycomb structure as claimed in any of claims 1 to 6, **characterized in that** the honeycomb unit further includes alumina particles, titania particles, silica particles, zirconia particles, ceria particles, mullite particles, or precursors thereof.

8. The honeycomb structure as claimed in any of claims 1 to 7, **characterized in that** a ratio by weight of silica to alumina is 30 to 50 in the zeolite of the cell wall.

9. The honeycomb structure as claimed in any of claims 1 to 8, **characterized in that** the inorganic binder includes at least one selected from a group consisting of alumina sol, silica sol, titania sol, water glass, sepiolite, and attapulgite.

10. The honeycomb structure as claimed in any of claims 1 to 9, **characterized in that** the honeycomb unit further includes inorganic fibers.

11. The honeycomb structure as claimed in claim 10, **characterized in that** the inorganic fibers are at least one selected from the group consisting of alumina, silica, silicon carbide, silica-alumina, glass, potassium titanate, and aluminum borate.

**12.** The honeycomb structure as claimed in any of claims 1 to 11, **characterized in that** the plural honeycomb units are joined by interposing an adhesive layer.

# FIG.1

# FIG.2

# FIG.3

# FIG.4

# FIG.5

# FIG.6

# FIG.7

Europäisches
Patentamt

European
Patent Office

Office européen
des brevets

# EUROPEAN SEARCH REPORT

Application Number

EP 09 00 6168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 847 320 A (NGK INSULATORS LTD [JP]) 24 October 2007 (2007-10-24) * claims; examples * ----- | 1-12 | INV. B01J29/00 B01J35/04 B01J35/06 |
| X | WO 01/49409 A (CORNING INC [US]) 12 July 2001 (2001-07-12) * claims; examples * ----- | 1-12 | B01J37/00 B01D53/92 |
| X | EP 0 782 880 A (NGK INSULATORS LTD [JP]) 9 July 1997 (1997-07-09) * claims; examples * ----- | 1-12 | |

TECHNICAL FIELDS
SEARCHED (IPC)

B01D
B01J

The present search report has been drawn up for all claims

| Place of search | Date of completion of the search | Examiner |
|---|---|---|
| The Hague | 3 September 2009 | Schoofs, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                 EP 09 00 6168

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2009

| Patent document cited in search report | | Publication date | Patent family member(s) | | Publication date |
|---|---|---|---|---|---|
| EP 1847320 | A | 24-10-2007 | JP | 2007296514 A | 15-11-2007 |
| | | | US | 2007269352 A1 | 22-11-2007 |
| WO 0149409 | A | 12-07-2001 | CN | 1414881 A | 30-04-2003 |
| | | | DE | 60023743 D1 | 08-12-2005 |
| | | | DE | 60023743 T2 | 27-07-2006 |
| | | | EP | 1242182 A1 | 25-09-2002 |
| | | | JP | 2003524521 T | 19-08-2003 |
| EP 0782880 | A | 09-07-1997 | JP | 3516718 B2 | 05-04-2004 |
| | | | JP | 8010566 A | 16-01-1996 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2005063653 A1